# EUROPÄISCHE PATENTSCHRIFT

(11) **EP 0 598 997 B1**
(45) Veröffentlichungstag und Bekanntmachung des Hinweises auf die Patenterteilung: **08.11.1995**
(21) Anmeldenummer: 93114305.1
(22) Anmeldetag: 07.09.1993
(51) Int. Cl.: B60T 17/22, F16D 66/02

(54) **Verfahren zur Ermittlung und Anzeige des Bremsbelagverschleisses von Bremsen einer Kfz-Bremsanlage sowie Anzeige- und Warneinrichtung zur Durchführung des Verfahrens.**
Procecess for determining and indicating the brake pad wear of a motor vehicle brake installation as well as a device for indicating and warning for carrying out the process
Procédé pour déterminer et indiquer l'usure d'une garniture de frein d'une installation de freinage d'un véhicule à moteur ainsi qu'un dispositif d'indication et d'avertissement pour la mise en oeuvre de ce procédé

(30) Priorität: 26.11.1992 DE 4239700
(43) Veröffentlichungstag der Anmeldung: 01.06.1994
(73) Patentinhaber: Volkswagen Aktiengesellschaft, 38436 Wolfsburg (DE)
(72) Erfinder: Schnürer, Otmar, Dipl.-Ing., D-38518 Gifhorn (DE)

(56) Entgegenhaltungen:
- DE-C- 3 300 446
- RESEARCH DISCLOSURE Bd. 319, Nr. 61, November 1990, EMSWORTH Seite 891 , XP160186 ANONYMUS 'brake fade compensation technique'
- RESEARCH DISCLOSURE Bd. 306, Nr. 108, Oktober 1989, NEW YORK Seite 769 , XP85486 ANONYMUS 'brake temperature measurement'

## Beschreibung

Die Erfindung betrifft ein Verfahren zur Ermittlung und Anzeige des Bremsbelagverschleisses von Bremsen einer Kfz-Bremsanlage der im Oberbegriff des Patentanspruchs 1 genannten Art.

Die meisten bekannten und zum Teil in der Praxis auch realisierten Einrichtungen zum Anzeigen des Bremsbelagverschleisses von Kfz-Bremsen basieren auf einer unmittelbaren Erfassung der Stärke bzw. Reststärke der überwachten Bremsbeläge mittels mechanischer und/oder elektrischer Bauelemente.

So ist es beispielsweise bekannt (z. B. DE-OS 25 19 830, DE-OS 29 09 247) unmittelbar im Bremsbelag ein elektrisches Signalkabel einer entsprechenden Überwachungs- oder Warneinrichtung einzubetten, das bei einem bestimmten Grad des Bremsbelagverschleisses mit dem rotierenden Teil der Bremse in Berührung kommt, wodurch - je nach Konzeption der jeweiligen Warneinrichtung entweder durch Unterbrechung oder aber durch Herstellung einer leitenden Verbindung - die Überwachungs- bzw. Warneinrichtung aktiviert wird.

Bei anderen bekannten Bremsbelagverschleiß-Warneinrichtungen (z. B. DE-OS 25 23 229) wird die durch den Bremsbelagverschleiß bedingte Abstandsveränderung der Zuspannorgane mechanisch erfaßt und mittels eines elektrischen Schiebewiderstandes in dazu proportionale elektrische Signale umgesetzt.

Bekannt sind auch Bremsbelagverschleiß-Warneinrichtungen (z. B. DE-33 19 988-C2, US-PS 3 975 706) bei denen mittels eines Sensors zum einen erfaßt wird, wenn der überwachte Bremsbelag infolge Verschleisses eine kritische Belagstärke unterschreitet und zum anderen signalisiert wird, wenn kritisch hohe Belagtemperaturen, die z. B. zur Dampfblasenbildung in der Bremshydraulik führen könnten, auftreten.

Bei einer anderen bekannten Bremsbelagverschleiß-Warneinrichtung (z. B. DE-33 00 446-C2) werden aus den sich infolge Bremsbelagverschleisses im Laufe der Zeit ändernden und kontinuierlich abgespeicherten Hubwegen der Bremszylinder kontinuierlich sogenannten Verschleißbeträge der Bremsbeläge bestimmt und diese Verschleißbeträge kontinuierlich aufaddiert. Die sich ergebende Summe der Verschleißbeträge wird optisch als Maß für den Bremsbelagverschleiß dargestellt, mit einem vorgegebenen zulässigen maximalen Wert des Bremsbelagverschleisses verglichen und gegebenenfalls ein entsprechendes Warnsignal ausgegeben. Als verschleißabhängiges Signal wird hierbei also die Zunahme des Bremszylinderhubs über eine Reihe von Bremsbetätigungen ausgewertet. Zur Überwachung des Verschleisses müssen an den Bremszylindern der zu überwachenden Bremsbeläge geeignete Meßwertaufnehmer montiert werden, was einschließlich der zugehörigen Anbauteile und der damit verbundenen Änderungen am Bremszylinder selbst einen erheblichen Aufwand bedeutet.

Eine andere bekannte Bremsbelagverschleiß-Warneinrichtung (DE-35 02 052-A1) nutzt die beim Betätigen der Bremse erfolgende Umsetzung der geleisteten Reibarbeit in Wärme aus, um ein Verschleißsignal zu ermitteln. Hierbei wird von der Vorstellung ausgegangen, daß sich das Wärmeaufnahmevermögen der Bremsbeläge infolge ihres mit dem Bremsbelagverschleiß einhergehenden Masseverlustes signifikant ändert und das sich ändernde Wärmeaufnahmevermögen entsprechend als geändertes Temperaturverhalten der Bremsbeläge bei oder nach ihrem Reibeingriff meßbar ist. Entsprechend sind den Radbremsen Temperatursensoren zugeordnet, deren Ausgangssignale einer elektronischen Auswerteeinrichtung zugeführt werden, in der ein Kennfeld des Temperaturverhaltens der Bremsbeläge in Abhängigkeit von deren Verschleißzustand eingespeichert ist. Zusätzlich werden der elektronischen Auswerteeinrichtung noch als Parameter für die beim Bremsen geleistete Reibarbeit die Ausgangssignale von den Radbremsen zugeordneten besonderen Massesensoren, die die der jeweiligen Radbremse zugeordnete Fahrzeugmasse sensieren, sowie die Ausgangssignale eines Fahrgeschwindigkeitssensors zugeführt. Anhand des abgespeicherten Kennfelds des Temperaturverhaltens in Abhängigkeit vom Verschleißzustand sowie der ihr zugeführten Sensorausgangssignale bildet die Auswerteeinrichtung jeweils ein Verschleißwertsignal, das in einer entsprechenden Verschleißanzeigeeinrichtung angezeigt wird.

Der sensorische Aufwand dieser vorbekannten Bremsbelagverschleiß-Warneinrichtung ist beträchtlich.

Vor diesem Hintergrund liegt der Erfindung die Aufgabe zugrunde, ein Verfahren der im Oberbegriff des Patentanspruchs 1 genannten Art anzugeben, das bei nur geringem Sensoraufwand eine ausreichend genaue und zuverlässige Ermittlung und Anzeige des Bremsbelagverschleisses ermöglicht.

Diese Aufgabe wird erfindungsgemäß durch die Merkmale des Patentanspruchs 1 gelöst.

Erfindungsgemäß ist lediglich das Drehverhalten der Fahrzeugräder sowie die jeweilige Bremszeit zu sensieren, wobei in vorteilhafter Weise zur Ermittlung der Bremszeit der bei jedem Kraftfahrzeug sowieso bereits vorhandene übliche Bremslichtschalter Verwendung finden kann. Der sensorische Aufwand besteht also letztlich nur in der Anordnung von den zu überwachenden Bremsen zugeordneten Sensoreinrichtungen, die die Drehzahl bzw. die Winkel- oder Umfangsgeschwindigkeit der Räder erfassen. Bei mit einer Antriebsschlupfregelung (ASR) ausgestatteten Kraftfahrzeug oder bei blockiergeschützten Kraftfahrzeugen, d. h. Kraftfahrzeugen, deren Bremsanlagen mit einer Automatischen-Blockierschutz-Einrichtung (ABS) ausgestattet sind, sind auch diese Raddrehzahlsensoren sowieso bereits vorhanden, so daß für das erfindungsgemäße Verfahren diesbezüglich ebenfalls kein Mehraufwand entsteht.

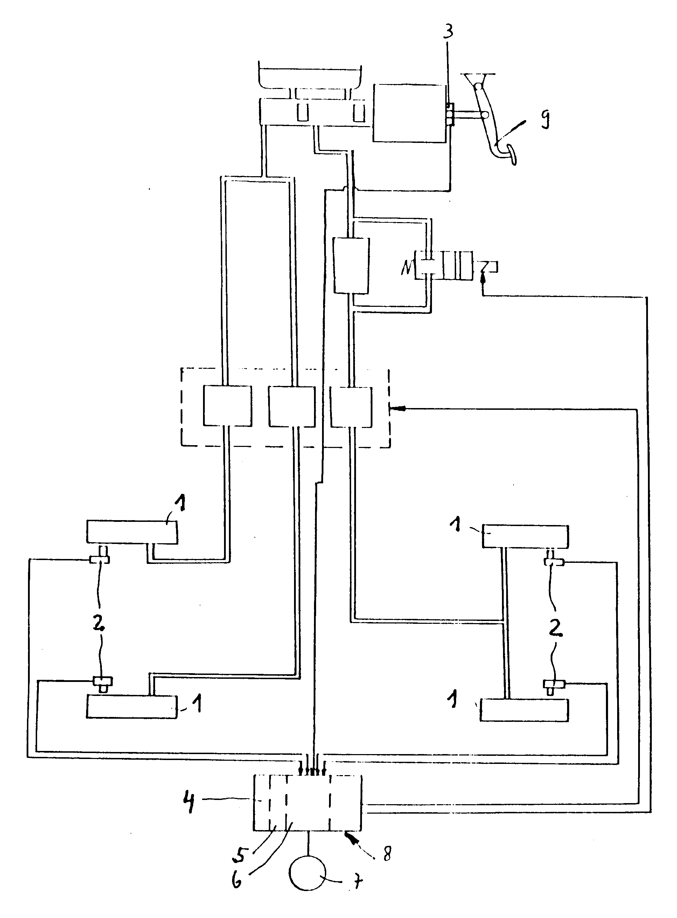

Anhand eines in der Zeichnung dargestellten Ausführungsbeispiels wird die Erfindung nachstehend näher erläutert.

Die einzige Figur der Zeichnung zeigt eine als Zweikreis-Bremsanlage ausgebildete blockiergeschützte hydraulische Kfz-Bremsanlage, wie sie als solche z. B. aus der DE-34 10 083-A1 vorbekannt ist.

Die einzelnen Bauelemente dieser Bremsanlage sind nicht weiter beziffert, da dies für das Verständnis der Erfindung nicht erforderlich ist.

Den einzelnen Fahrzeugrädern 1 sind jeweils erste Sensoreinrichtungen 2 zur Erfassung ihres Drehverhaltens zugeordnet. Die Ausgangssignale dieser ersten Sensoreinrichtungen 2 werden zusammen mit den Ausgangssignalen einer die Betätigungszeit des Bremspedals 9, also die Bremszeit erfassenden zweiten Sensoreinrichtung 3 einer mit 6 bezifferten Auswerteelektronik zugeführt. Als zweite Sensoreinrichtung 3 wird dabei vorzugsweise der übliche Bremslichtschalter der Bremsanlage verwendet.

Die Ausgangssignale der Sensoreinrichtungen 2 und 3 werden fortlaufend der vorzugsweise durch einen Mikroprozessor gebildeten Auswerteelektronik 6 zugeführt, die aus ihnen fortlaufend unter Rückgriff auf abgespeicherte fahrzeug und bremsenspezifische Festdaten sowie ein abgespeichertes Bremsbelagverschleißdaten-Kennfeld für jede differentielle Bremszeit, d. h. bei jeder Betätigung des Bremspedals 9, einen differentiellen Bremsbelagverschleißwert ermittelt und zumindest vorübergehend speichert. Die bei jeder Betätigung der Bremse ermittelten differentiellen Bremsbelagverschleißwerte werden in der Auswerteelektronik 6 fortlaufend aufaddiert, so daß zu jedem Zeitpunkt X der Betriebsdauer der Bremsbeläge der bis dahin eingetretene Belagverschleiß bekannt ist (nämlich als Summe der einzelnen differentiellen Belagverschleißwerte) und in einer mit 7 angedeuteten geeigneten Anzeigeeinrichtung angezeigt werden kann. In vorteilhafter Weise kann bei Erreichen eines vorgegebenen höchstzulässigen Gesamtverschleisses der Bremsbeläge dann ein geeignetes akustische oder optisches Warnsignal erzeugt werden.

In der Zeichnung ist mit 4 eine erste Speichereinrichtung angedeutet, die zum Abspeichern relevanter fahrzeug- und bremsenspezifischer Festdaten dient. Abgespeichert werden hier solche Festdaten, die für die Abbremsung des Fahrzeugs, d. h. für die Fahrzeugverzögerung und für die hierzu aufzubringende Reibarbeit bedeutsam sind, z. B. die wirksamen Reibflächengrößen der Radbremsen sowie das Gewicht des Fahrzeugs. Da das Fahrzeuggewicht nicht konstant ist, sondern von der jeweiligen Beladung abhängt, empfiehlt es sich ein Fahrzeuggewicht abzuspeichern, das sich bei Annahme einer statistisch ermittelbaren mittleren Fahrzeugbeladung ergibt. Bei Kenntnis u. a. des Fahrzeuggewichts und der wirksamen Reibflächengrößen kann die Auswerteelektronik aus den ihr zugeführten Sensorsignalen ohne Schwierigkeiten u. a. die bei jeder Bremsenbetätigung aufgebrachten Bremsmomente (bzw. Zuspannkraft, Bremsdruck o. ä.), die geleistete Reibarbeit und die Belagtemperaturen errechnen, die für den Verschleiß der Bremsbeläge bedeutsam sind.

In der Zeichnung ist mit 5 eine zweite Speichereinrichtung angedeutet, in der das Bremsbelagverschleißdaten-Kennfeld der eingesetzten Bremsbeläge abgespeichert ist. Dieses Kennfeld kann empirisch oder auch experimentell ermittelt sein. Es stellt den Verschleiß, d. h. den Abrieb der Beläge als Funktion verschiedener Betriebsparameter dar, u. a. der Bremszeit, der Anfangs- und Enddrehzahl der gebremsten Räder, des Anpreßdrucks der Beläge sowie der Belagtemperaturen. Bei Kenntnis dieser relevanten Betriebsparameter, die von der Auswerteelektronik 6 aus den ihr bei Betätigung der Bremse fortlaufend zugeführten Sensorsignalen mit Hilfe der in der ersten Speichereinrichtung 4 abgespeicherten fahrzeug- und bremsenspezifischen Festdaten in einfacher Weise errechnet werden, kann die Auswerteelektronik so für jeden differentiellen Zeitabschnitt, d. h. für jede zeitlich begrenzte Betätigung des Bremspedals 9 aus dem abgespeicherten Bremsbelagverschleiß-Kennfeld einen zu diesem Bremsintervall gehörigen differentiellen Bremsbelagverschleißwert herauslesen und dann die Summe der fortlaufend aufaddierten differentiellen Bremsbelagverschleißwerte in der Anzeigevorrichtung 7 als konkreten Bremsbelagverschleiß zur Anzeige bringen.

Wenn das erfindungsgemäße Verfahren bzw. die erfindungsgemäße Anzeige- und Warneinrichtung in einem Kraftfahrzeug eingesetzt wird, dessen Bremsanlage mit einer Automatischen-Blockierschutz-Regeleinrichtung (ABS) ausgerüstet ist, können in vorteilhafter Weise die für diese ABS-Einrichtung sowieso vorhandenen drehzahlerfassenden Sensoreinrichtungen auch für die Bremsbelagverschleiß-Warneinrichtung als erste Sensoreinrichtungen eingesetzt werden, wie im Ausführungsbeispiel dargestellt. Es ist dann natürlich auch möglich, die elektronischen Elemente dieser Warneinrichtung, d. h. die ersten und zweiten Speichereinrichtungen 4, 5 sowie die eigentliche Auswerteelektronik 6 als integraler Bestandteil der Elektronik dieser ABS-Einrichtung auszubilden, d. h. ihre Funktionen innerhalb eines gemeinsamen Mikroprozessors zu realisieren. In der Zeichnung ist mit 8 ein entsprechend aufgebautes elektronisches Antiblockier-Steuer- oder Regelgerät angedeutet.

### BEZUGSNUMMERNLISTE

- 1: Fahrzeugrad
- 2: erste Sensoreinrichtung zur Erfassung der Raddrehzahl
- 3: zweite Sensoreinrichtung zur Erfassung der Bremszeit; Bremslichtschalter
- 4: erste Speichereinrichtung zur Abspeicherung fahrzeug- und bremsenspezifischer Festdaten
- 5: zweite Speichereinrichtung zur Abspeicherung eines Bremsbelagverschleißdaten-Kennfelds
- 6: Auswerteelektronik
- 7: Anzeigevorrichtung
- 8: elektronisches
Antiblockier-Steuer- oder Regelgerät
- 9: Bremspedal

## Patentansprüche

1. Verfahren zur Ermittlung und Anzeige des Bremsbelagverschleisses von Bremsen einer Kfz-Bremsanlage, bei dem fortlaufend verschiedene Betriebsparameter des Kraftfahrzeugs erfaßt und aus einem abgespeicherten Bremsbelagverschleißdaten-Kennfeld zugehörige verschleißwerte ermittelt werden,
**dadurch gekennzeichnet,**
daß als Betriebsparameter unmittelbar nur die jeweilige Bremszeit sowie die Drehzahl bzw. die Winkel- oder Umfangsgeschwindigkeit der Fahrzeugräder (1) erfaßt werden, daß aus den erfaßten Betriebsparametern unter Rückgriff auf abgespeicherte Fahrzeug- und Bremsendaten belagverschleißrelevante weitere Betriebsparameter errechnet und mit diesen aus dem abgespeicherten Bremsbelagverschleißdaten-Kennfeld zugehörige differentielle Bremsbelagverschleißwerte ermittelt werden, und daß als aktueller Gesamtverschleiß der Bremsbeläge die Summe der fortlaufend aufaddierten differentiellen Bremsbelagverschleißwerte zur Anzeige gebracht wird.

2. Anzeige- und Warneinrichtung zum Durchführen des Verfahrens nach Anspruch 1,
**gekennzeichnet durch**
erste Sensoreinrichtungen (2) zur Erfassung der Drehzahl der Fahrzeugräder (1),
zweite Sensoreinrichtungen (3) zur Erfassung der Bremszeit, erste Speichereinrichtungen (4) zum Abspeichern von fahrzeug- und bremsenspezifischen Festdaten, insbesondere von Gewichtsdaten des Fahrzeugs sowie Größendaten der Bremsbeläge, zweite Speichereinrichtungen (5) zum Abspeichern des Bremsbelagverschleißdaten-Kennfelds,
eine mit den Speichereinrichtungen (4, 5) zumindest funktionell gekoppelte und eingangsseitig mit den Ausgangssignalen der Sensoreinrichtungen (2, 3) beaufschlagte Auswerteelektronik (6) zum logischen Verknüpfen der Sensor-Ausgangssignale mit den abgespeicherten Daten der Speichereinrichtungen (4, 5),
sowie eine Anzeigevorrichtung zum optischen und/oder akustischen Anzeigen des von der Auswerteelektronik (6) aus den Sensorausgangssignalen sowie den abgespeicherten Daten ermittelten Belagverschleisses.

3. Anzeige- und Warneinrichtung nach Anspruch 2,
**dadurch gekennzeichnet,**
daß die Funktionen der Speichereinrichtungen (4, 5) und der Auswerteelektronik (6) in einem Mikroprozessor zusammengefaßt sind.

4. Anzeige- und Warneinrichtung nach Anspruch 2 oder 3,
**dadurch gekennzeichnet**,
daß die zweite Sensoreinrichtung (3) durch einen Bremslichtschalter gebildet ist.

5. Anzeige- und Warneinrichtung nach einem der Ansprüche 2 bis 4,
**dadurch gekennzeichnet**,
daß zumindest ein Teil der Sensoreinrichtungen (2, 3) und der Auswerteelektronik (6) durch Bauelemente einer Automatischen-Blockierschutz-Einrichtung (ABS) oder einer Antriebsschlupf-Regeleinrichtung (ASR) gebildet sind.

## Claims

1. Process for determining and indicating the brake pad wear of brakes of a motor vehicle brake installation wherein continuous different operating parameters of the motor vehicle are detected and associated wear values are determined from a stored brake pad wear data characteristic field, characterised in that the operating parameters detected directly are only the respective braking time and the rotational speed and the angle or peripheral velocity of the motor vehicle wheels (1), furthermore that further operating parameters relevant to the brake pad wear are calculated from the detected operating parameters by referring to the stored motor vehicle and braking data and using the said further operating parameters the associated differential brake pad wear values are determined from the stored brake pad wear data characteristic field, and furthermore that the total of the continuously totalled differential brake pad wear values is displayed as the actual total wear of the brake pads.

2. Indicating and warning device for the purpose of carrying out the process according to claim 1, characterised by first sensor devices (2) for the purpose of detecting the rotational speed of the motor vehicle wheels (1), by second sensor devices (3) for the purpose of detecting the braking time, by first storage devices (4) for the purpose of storing motor vehicle and brake-specific fixed data, in particular data relating to the weight of the motor vehicle and data relating to the size of the brake pads, by second storage devices (5) for the purpose of storing the brake pad wear data characteristic field, by an evaluating electronic (6) coupled to the storage devices (4, 5) in at least a functional manner and acted upon on the input side by the output signals of the senor devices (2, 3) for the purpose of logically coupling the sensor output signals to the stored data of the storage devices (4,5), as well as by an indicating device for the purpose of optically and/or acoustically indicating the pad wear determined by the evaluating electronics (6) from the sensor output signals as well as from the stored data.

3. Indicating and warning device according to claim 2, characterised in that the function of the storage devices (4, 5) and the evaluation electronics (6) are combined in one microprocessor.

4. Indicating and warning device according to claim 2 or 3, characterised in that the second sensor device (3) is a braking light switch.

5. Indicating and warning device according to one of claims 2 to 4, characterised in that at least one part of the sensor devices (2, 3) and the evaluation electronics (6) are formed by components of an automatic anti-locking device (ABS) or an anti-slip control device (ASR).

## Revendications

1. Procédé pour déterminer et indiquer l'usure de garnitures de frein d'une installation de freinage de véhicule à moteur, dans lequel on détecte de façon continue différents paramètres de fonctionnement du véhicule à moteur et on détermine, à partir d'un champ caractéristique des données relatives à l'usure des garnitures de frein, mises en mémoire, des valeurs correspondantes de l'usure,
procédé caractérisé
en ce que l'on détecte comme paramètres de fonctionnement directement seulement le temps de freinage correspondant ainsi que la vitesse de rotation ou la vitesse angulaire ou périphérique des roues (1) du véhicule,
en ce qu'à partir des paramètres de fonctionnement détectés on calcule d'autres paramètres de fonctionnement caractéristiques de l'usure des garnitures en se reportant aux données relatives au véhicule et aux freins mises en mémoire et on détermine avec ceux-ci, à partir du champ caractéristique des données relatives à l'usure des garnitures de frein mises en mémoire, les valeurs différentielles correspondantes de l'usure des garnitures de frein,
et en ce que l'on indique comme l'usure totale actuelle des garnitures de frein la somme des valeurs différentielles, additionnées de façon continue, de l'usure des garnitures de frein.

2. Système indicateur et avertisseur pour la mise en oeuvre du procédé selon la revendication 1,
caractérisé par
des premiers systèmes de capteurs (2), qui servent à détecter la vitesse de rotation des roues (1) du véhicule,
des seconds systèmes de capteurs (3), qui servent à détecter le temps de freinage,
des premiers systèmes de mémoire (4), qui servent à mettre en mémoire des données fixes relatives au véhicule et aux freins, en particulier des données relatives au poids du véhicule ainsi que des données sur la grandeur des garnitures de frein,
des seconds systèmes de mémoire (5) servant à mettre en mémoire le champ caractéristique des données relatives à l'usure des garnitures de frein,
un circuit électronique d'exploitation (6), couplé de façon au moins fonctionnelle avec les systèmes de mémoire (4, 5) et, du côté de l'entrée, actionné par les signaux de sortie des systèmes de capteurs (2, 3), circuit qui sert à combiner logiquement les signaux de sortie des capteurs aux données mises en mémoire des systèmes de mémoire (4, 5).
ainsi qu'un dispositif indicateur pour indiquer, de façon optique et/ou acoustique, l'usure des garnitures déterminée par le circuit électronique d'exploitation (6) à partir des signaux de sortie des capteurs ainsi qu'à partir des données mises en mémoire.

3. Système indicateur et avertisseur selon la revendication 2,
caractérisé en ce que les fonctions des systèmes de mémoire (4, 5) et du circuit électronique d'exploitation (6) sont rassemblées dans un microprocesseur.

4. Système indicateur et avertisseur selon la revendication 2 ou 3,
caractérisé en ce que le second système de capteurs (3) est constitué par un contacteur de stop.

5. Système indicateur et avertisseur selon l'une des revendications 2 à 4,
caractérisé en ce qu'au moins une partie des systèmes de capteurs (2, 3) et du circuit électronique d'exploitation (6) est constitué par les composants d'un système de protection automatique contre le blocage des roues en cas de freinage (ABS) ou un système de régulation anti-patinage (ASR).
